# EUROPEAN PATENT APPLICATION

(11) **EP 3 173 715 A1**
(43) Date of publication of application: **31.05.2017**
(21) Application number: 16161819.4
(22) Date of filing: 23.03.2016
(51) Int. Cl.: F25D 3/08, A23L 3/375

(54) **METHOD AND APPARATUS FOR ALLOCATING A CHILLING SUBSTANCE**

(30) Priority: 25.11.2015 US 201562259673 P; 25.02.2016 US 201615053130
(71) Applicant: Linde Aktiengesellschaft, 80331 München (DE)
(72) Inventor: NEWMAN, Michael D., Hillsborough, NJ 08844 (US); EWIG, Mark, Madison, WI 53704 (US)
(74) Representative: Hofmann, Andreas

(57) **Abstract**

In order to overcome the limitations and problems that earlier methods and apparatus have experienced, a method for allocating a chilling substance (28), in particular dry ice, for example CO₂ snow or CO₂ pellets, to a transport tote (12) for preserving a product (24), in particular food product or grocery, therein, comprising:
- measuring thermal properties of the product (24) to be transported;
- calculating environmental conditions for which the transport tote (12) is to be exposed during transport;
- allocating an amount of the chilling substance (28) to an, in particular insulated, container (26) for being deposited in the transport tote (12) for the preserving of the product (24); and
- depositing the container (26) in the transport tote (12).

A related apparatus or system (10) is also provided.

## Description

### Technical field of the present invention

The present invention relates to transport cooling for products, in particular for food products, for example in grocery totes.

### Technological background of the present invention

Carbon dioxide (CO₂) is used to provide refrigeration for home grocery delivery. CO₂ provides reliable and tremendous cooling per unit mass and leaves no moisture as it melts. CO₂ pellets are also readily available, although expensive to use for shipping purposes.

Dry ice is usually packed with the food product all around the food product, even in many instances covering same, prior to shipment. The filling of the dry ice results in shipping the container as a "one size fits all" approach with the dry ice. It is also not uncommon for the dry ice to be delivered manually with no understanding as to the correct amount of refrigeration needed for the product being shipped.

As a result, the "one size fits all" approach is an inefficient and certainly can be an unnecessarily expensive process when shipping the grocery product.

### Disclosure of the present invention: object, solution, advantages

Starting from the disadvantages and shortcomings as described above as well as taking the prior art as discussed into account, an object of the present invention is to overcome the limitations and problems that earlier methods and apparatus have experienced.

This object is accomplished by a method comprising the features of claim 1 as well as by an apparatus comprising the features of claim 13. Advantageous embodiments, expedient improvements and other optional features of the present invention are set forth herein and disclosed in the respective dependent claims.

The present invention basically provides for an automated carbon dioxide (CO₂) portioning system for grocery totes.

There is therefore provided a method for allocating a chilling substance, in particular dry ice, for example CO₂ snow or CO₂ pellets, to a transport tote for preserving a product, in particular food product or grocery, therein, which includes measuring thermal properties of the product to be transported; calculating environmental conditions for which the transport tote is to be exposed during transport; allocating an amount of the chilling substance to an, in particular insulated, container for being deposited in the transport tote for the preserving of the product; and depositing the container in the transport tote, in particular positioning the container on top of the product in the transport tote.

According to an advantageous embodiment of the present invention, the transport tote may be transported to a remote location and during which the product may be preserved for an end user.

In an expedient embodiment of the present invention, the allocating may occur
- before the product is deposited in the transport tote or
- after the product is deposited in the transport tote or
- after the depositing of the container in the transport tote.

According to a favoured embodiment of the present invention, the thermal properties may be selected from the group consisting of storage temperature, mass, specific heat, latent heat, and combinations of same.

In a preferred embodiment of the present invention, the environmental conditions may be selected from the group consisting of external conditions or outside conditions (for example temperature external to the transport tote and/or humidity external to the transport tote), delivery time for the transport tote to reach the end user, residence time of the transport tote at the end user, and conditions of a transport platform delivering the transport tote to the end user.

According to an advantageous embodiment of the present invention, the allocating may further comprise further calculating the amount of the chilling substance needed responsive to said thermal properties and/or responsive to said environmental conditions.

In an expedient embodiment of the present invention, the allocating may further comprise filling the container with the chilling substance at a location remote from the depositing the container in the transport tote.

According to a favoured embodiment of the present invention, the product may comprise at least one grocery bag.

In a preferred embodiment of the present invention, the container may be sealed after the allocating.

There is also provided an apparatus for preserving a product, in particular food product or grocery, for transport to an end user, which includes a transport tote having an internal space therein sized and shaped to receive the product; and a sealed, in particular insulated, container in which a chilling substance, in particular dry ice, for example CO₂ snow or CO₂ pellets, is contained, the sealed container positioned in the transport tote.

According to an advantageous embodiment of the present invention, a conveyor may be provided for conveying the transport tote to a position to receive the sealed container.

In an expedient embodiment of the present invention, the product may comprise a plurality of different foodstuffs, said plurality of different foodstuffs in particular being in at least one grocery bag.

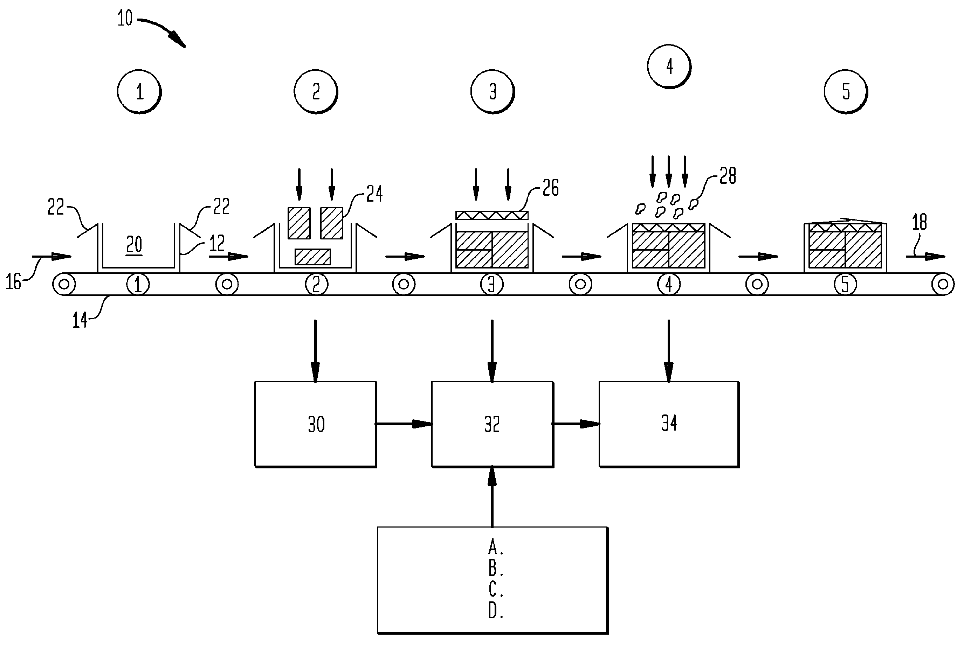

### Brief description of the drawing

For a more complete understanding of the present embodiment disclosures and as already discussed above, there are several options to embody as well as to improve the teaching of the present invention in an advantageous manner. To this aim, reference may be made to the claims dependent on claim 1 as well as on claim 13; further improvements, features and advantages of the present invention are explained below in more detail with reference to particular and preferred embodiments by way of nonlimiting example and to the appended drawing figure taken in conjunction with the following description of exemplary embodiments, of which the figure shows a side view of an automated CO₂ portioning system embodiment of the present invention, said system working according to the method of the present invention.

### Detailed description of the drawing; best way of embodying the present invention

Before explaining the inventive embodiments in detail, it is to be understood that the present invention is not limited in its application to the details of construction and arrangement of parts illustrated in the accompanying drawing, since the present invention is capable of other embodiments and being practiced or carried out in various ways. Also, it is to be understood that the phraseology or terminology employed herein is for the purpose of description and not of limitation.

In the following description, terms such as horizontal, upright, vertical, above, below, beneath and the like, are used solely for the purpose of clarity illustrating the present invention and should not be taken as words of limitation. The drawing is for the purpose of illustrating the present invention and is not intended to be to scale.

The figure shows products, such as grocery products, shipped in totes or containers, which hold at least one and for many uses a plurality of bags of groceries. The totes can be packaged for the groceries to be shipped in a frozen state, a chilled state, or ambient.

The present embodiments provide a supplier for a shipper of grocery products with a solution for accurately allocating the right amount of CO₂ with each grocery tote depending upon the product being shipped in the tote. The amount of CO₂ to be used for each tote is based upon the product's thermal characteristics, delivery time for the tote, the refrigeration necessary for the products being delivered, and environmental conditions to which the tote is subjected during the delivery to the recipient.

Referring to the figure, there is disclosed how the process of the present embodiments works for the automated CO₂ portioning system for grocery totes in the present embodiments. In particular and referring to the figure, a system for a method is shown generally at 10 and includes the following stages.
(1) Empty grocery totes 12, boxes or containers enter an automatic conveyor line 14 or conveyor belt. The conveyor line 14 includes an inlet 16 (enter) and an outlet 18 (exit). The tote 12 has an internal space 20 which can be closed off with a top 22 by way of for example flaps of closure material. The internal space 20 is sized and shaped to receive at least one and for many applications a plurality of groceries 24 or grocery bags containing a food product or products, in addition to a snow box 26.
(2) Auto packaging: The totes 12 are filled with the groceries 24 specific to a customer's order. Thermal characteristics of the groceries 24 are known and uploaded into a database (i. e. storage temperature, mass, specific heat, latent heat, etc.). The thermal mass of the groceries 24 in each tote 12 can be calculated (reference numeral 30). The top 22 of the tote 12 remains in an open position for a purpose to be described hereinafter.
(3) The snow box 26 (insulated box for holding CO₂ snow 28 or CO₂ pellets) is positioned in the internal space 20 near a top of the delivery tote 12. During this step, the computer system (not shown) calculated (reference numeral 32) the amount of CO₂ snow 28 required for transport based on the following variables, i. e.
   - thermal properties of food = thermal mass,
   - desired holding temperature of product,
      A. outside conditions = external conditions for the day (outside temperature, humidity over the course of the day),
      B. delivery time to customer site,
      C. time at customer home = amount of time the tote 12 will remain at the customer site,
      D. conditions of a delivery platform transporting the tote 12 such as for example conditions inside a delivery truck (chilled, frozen, ambient). The delivery platform may be intermodal, i. e. transportable in an intermodal delivery platform where, for purposes herein, "intermodel delivery platform" refers to transport of freight in an intermodal container or vehicle (truck, ship, rail) without any handling of the freight itself when changing modes.
   With these variables, accurate heat transfer calculations can be made which will result in an estimate of the amount of CO₂ snow 28 required to be deposited in the snow box 26 for use with the groceries 24 in the tote 12.
(4) CO₂ filling: The calculated amount of CO₂ snow 28 is automatically dispensed (reference numeral 34) or deposited in the snow box 26 as per stage (3) above. The snow box 26 is sealed to prevent direct contact with the CO₂ pellets in the snow box.
(5) Pack for shipment: The tote 12 is closed by moving the top 22, such as the flaps for example, into a position to seal off access to the internal space 20 of the tote. The tote 12 then exits the conveying line 14 for loading into trucks (not shown) and shipment to customer(s) at a remote location.

An alternative embodiment calls for the snow box 26 to be filled separately with the CO₂ snow 28, possibly at a remote location from the conveyor line 14 shown, after which the snow box is deposited on top of the grocery products 24 in the tote. The top 22, or open-end of the tote, can have a movable cover or a pair of flaps which overlap to seal the opening of the internal space 20 of the tote after the grocery products 24 and snow box 26 are deposited therein.

The snow box 26 rests on top of the grocery products 24 for chilling or maintaining same in a frozen state. The grocery products 24 do not have to be packaged, but can instead by unwrapped items such as for example apples, pears, IQR (individual quick frozen) shrimp, etc.

It will be understood that the embodiments described herein are merely exemplary, and that a person skilled in the art may make variations and modifications without departing from the spirit and scope of the present invention. All such variations and modifications are intended to be included within the scope of the present invention as described and claimed herein. It should be understood that the embodiments described above are not only in the alternative, but can be combined.

### List of reference numerals

- 10: system
- 12: transport box, transport container or transport tote, in particular grocery box, grocery container or grocery tote
- 14: conveying line or conveying belt or conveyor, in particular automatic conveying line or automatic conveying belt or automatic conveyor
- 16: inlet
- 18: outlet
- 20: internal space or chamber
- 22: top, in particular flap, for example of closure material
- 24: product, in particular food product or grocery
- 26: bag or box or container or pouch, in particular insulated bag or insulated box or insulated container or insulated pouch, for example snow bag or snow box or snow container or snow pouch
- 28: chilling substance, in particular dry ice, for example CO₂ snow or CO₂ pellets
- 30: grocery thermomass calculator
- 32: amount of CO₂ calculated
- 34: calculated CO₂ automatically dispensed
- A.: outside conditions
- B.: delivery time
- C.: residence time at customer home
- D.: transport platform conditions, in particular truck conditions

## Claims

1. A method for allocating a chilling substance (28), in particular dry ice, for example CO₂ snow or CO₂ pellets, to a transport tote (12) for preserving a product (24), in particular food product or grocery, therein, comprising:
- measuring thermal properties of the product (24) to be transported;
- calculating environmental conditions for which the transport tote (12) is to be exposed during transport;
- allocating an amount of the chilling substance (28) to an, in particular insulated, container (26) for being deposited in the transport tote (12) for the preserving of the product (24); and
- depositing the container (26) in the transport tote (12).

2. The method according to claim 1, further comprising transporting the transport tote (12) to a remote location and during which the product (24) is preserved for an end user.

3. The method according to claim 1 or 2, wherein the allocating occurs
- before the product (24) is deposited in the transport tote (12) or
- after the product (24) is deposited in the transport tote (12) or
- after the depositing of the container (26) in the transport tote (12).

4. The method according to at least one of claims 1 to 3, wherein the depositing comprises positioning the container (26) on top of the product (24) in the transport tote (12).

5. The method according to at least one of claims 1 to 4, wherein the chilling substance (28) comprises a substance selected from the group consisting of carbon dioxide (CO₂) snow and carbon dioxide (CO₂) pellets.

6. The method according to at least one of claims 1 to 5, wherein the thermal properties are selected from the group consisting of storage temperature, mass, specific heat, latent heat, and combinations of same.

7. The method according to at least one of claims 1 to 6, wherein the environmental conditions are selected from the group consisting of external conditions or outside conditions (A.), delivery time (B.) for the transport tote (12) to reach the end user, residence time (C.) of the transport tote (12) at the end user, and conditions (D.) of a transport platform delivering the transport tote (12) to the end user.

8. The method according to claim 7, wherein the external conditions or outside conditions (A.) comprise
- the temperature external to the transport tote (12), and/or
- the humidity external to the transport tote (12).

9. The method according to at least one of claims 6 to 8, wherein the allocating further comprises further calculating the amount of the chilling substance (28) needed
- responsive to said thermal properties, and/or
- responsive to said environmental conditions.

10. The method according to at least one of claims 1 to 9, wherein the allocating further comprises filling the container (26) with the chilling substance (28) at a location remote from the depositing the container (26) in the transport tote (12).

11. The method according to at least one of claims 1 to 10, wherein the product (24) comprises at least one grocery bag.

12. The method according to at least one of claims 1 to 11, further comprising sealing the container (26) after the allocating.

13. An apparatus for preserving a product (24), in particular food product or grocery, for transport to an end user, comprising:
- a transport tote (12) having an internal space (20) therein sized and shaped to receive the product (24); and
- a sealed, in particular insulated, container (26) in which a chilling substance (28), in particular dry ice, for example CO₂ snow or CO₂ pellets, is contained, the sealed container (26) positioned in the transport tote (12).

14. The apparatus according to claim 13, further comprising a conveyor (14) for conveying the transport tote (12) to a position to receive the sealed container (26).

15. The apparatus according to claim 13 or 14, wherein the product (24) comprises a plurality of different foodstuffs, said plurality of different foodstuffs in particular being in at least one grocery bag.
